# EUROPÄISCHE PATENTSCHRIFT

(11) **EP 1 660 701 B1**
(45) Veröffentlichungstag und Bekanntmachung des Hinweises auf die Patenterteilung: **25.02.2015**
(21) Anmeldenummer: 04764258.2
(22) Anmeldetag: 18.08.2004
(51) Int. Cl.: C25D 17/00, C25D 17/06

(54) **STROMVERSORGUNGSEINRICHTUNG IN EINER VORRICHTUNG ZUR ELEKTROCHEMISCHEN BEHANDLUNG**
POWER SUPPLY DEVICE IN A DEVICE FOR ELECTROCHEMICAL TREATMENT
SYSTEME D'ALIMENTATION EN COURANT DANS UN DISPOSITIF DE TRAITEMENT ELECTROCHIMIQUE

(30) Priorität: 04.09.2003 DE 10340888
(43) Veröffentlichungstag der Anmeldung: 31.05.2006
(73) Patentinhaber: Atotech Deutschland GmbH, 10553 Berlin (DE)
(72) Erfinder: SCHELLER, Britta, 90518 Altdorf (DE); BREHM, Klaus, 90602 Pyrbaum (DE); LORENZ, Olaf, 90518 Altdorf (DE)
(74) Vertreter: Banzer, Hans-Jörg
(86) Internationale Anmeldenummer: PCT/EP2004/009272
(87) Internationale Veröffentlichungsnummer: WO 2005/028718

(56) Entgegenhaltungen:
- CA-A1- 2 341 218
- DE-A1- 3 939 256
- DE-U1- 29 708 602
- US-A- 3 616 447
- US-A- 5 000 833

## Beschreibung

Die vorliegende Erfindung bezieht sich auf eine Stromversorgungseinrichtung für Behandlungsgut in einer Vorrichtung zur elektrochemischen Behandlung desselben, insbesondere in Galvanisier- oder Ätzanlagen.

Zum elektrolytischen Aufbringen einer leitenden Schicht (Galvanisieren) wird ein Behandlungsgut über Stromzuführungen und Befestigungsmittel mit einem Minuspol einer Gleichstromquelle verbunden. Eine Gegenelektrode, in diesem Fall ein Anode, ist dementsprechend mit einem Pluspol der Gleichstromquelle elektrisch leitend verbunden. Sowohl die Anode als auch das Behandlungsgut befinden sich in einem Elektrolyten, welcher positiv geladene Ionen des aufzubringenden Materials enthält. Diese wandern aufgrund des elektrischen Feldes, welches sich zwischen der Anode und dem Behandlungsgut ausbildet, zu diesem Behandlungsgut hin und werden dort abgeschieden.

Bei einem elektrolytischen Ätzen sind die Polaritäten entsprechend vertauscht, das Behandlungsgut ist dann mit dem Pluspol der Stromquelle verbunden.

Die Stromzuführungen sind zumindest an dem dem Behandlungsgut zugewandten Ende üblicherweise als Kontaktmittel in Form von Klemmen, Zangen oder Klammern ausgebildet, um das Behandlungsgut festhalten zu können. Die gesamte Stromzuführung inklusive dieser Kontaktmittel muss dabei zumindest in ihrem Inneren aus einem elektrisch leitfähigen Material bestehen und so dimensioniert sein, dass in der Praxis vorkommende große Ströme mit nur geringer Verlustleistung und Erwärmung auf das Behandlungsgut übertragen werden können. Die genaue Dimensionierung der Stromzuführungen hängt dabei von dem verwendeten elektrisch leitfähigen Material ab, bei einem schlechter leitenden Material ist beispielsweise ein größerer Leitungsquerschnitt erforderlich.

Die Stromzuführungen sollten dabei an ihrer Oberfläche möglichst elektrisch isoliert sein, um zu verhindern, dass sich während des Galvanisierungsprozesses, d. h. während einer Metallabscheidung auf dem Behandlungsgut, auch große Mengen von Metall auf der Stromzuführung niederschlagen. In diesem Fall muss das Metall in einem anschließenden Entmetallisierungsprozess wieder von der Stromzuführung entfernt werden, um mögliche Störungen bei der Stromübertragung von den Kontaktmitteln der Stromzuführung auf das Behandlungsgut durch diese Metallablagerungen zu vermeiden. Tatsächlich wird an blankliegenden Teilen der Stromzuführung verglichen mit der Oberfläche des Behandlungsgutes ca. die zwei- bis zehnfache Menge an Metall abgeschieden. Dies liegt daran, dass die Stromzuführung in einer gedachten Widerstandskette von der Gleichstromquelle zum Behandlungsgut näher an dieser Gleichstromquelle angeordnet ist, also auf einem entsprechend höheren elektrischen Potential liegt und daher dort eine Feldlinienkonzentration stattfindet, welche wiederum eine größere Metallabscheidung verursacht.

Zudem wirkt eine derartige blankliegende Stromzuführung gegenüber dem Behandlungsgut als so genannte Raubkathode. Der unerwünschte Metallniederschlag an der Stromzuführung führt nämlich zu einer Reduzierung der Dicke der Metallschicht am Behandlungsgut in unmittelbarer Umgebung der Stromzuführung. Dies führt beispielsweise bei der Beschichtung von Leiterplatten, bei der es auf sehr gleichmäßige Schichten ankommt, bei einem nachfolgenden Ätzschritt zu nicht verwendbaren Ausschussplatten.

Um dieses Problem zu vermeiden, ist es bekannt, außer denjenigen Abschnitten der Kontaktmittel, welche zur elektrischen Kontaktierung des Behandlungsgutes dienen, beispielsweise Kontaktflächen, selbst alle Oberflächen der Stromzuführung, welche mit dem Elektrolyt in Berührung kommen können, elektrisch zu isolieren. Denn auf elektrisch isolierten Oberflächen kann sich bei einem Galvanisierungsverfahren kein Metall niederschlagen.

Diese Isolierung erfolgt in der Regel durch spezielle Kunststoffe, welche eine hohe chemische Beständigkeit, eine hohe Temperaturfestigkeit und eine hohe Abriebfestigkeit aufweisen. Der Auftrag dieser Spezialkunststoffisolierschicht erfolgt durch Tauchen oder Spritzen mit einer anschließenden Aushärtung der Schicht. Wenn in einem derartigen Tauch- oder Spritzvorgang die Kontaktmittel, beispielsweise eine Kontaktfläche, ebenfalls isoliert worden sind, müssen sie nach dem Aushärten mechanisch beispielsweise durch Schleifen oder Fräsen wieder freigelegt werden. Wenn wegen hoher Anforderungen an die Festigkeit der Isolierung eine dickere Schicht aufgetragen wird, ist eine Wiederholung des Tauch- oder Spritzvorgangs mit jeweils nachfolgendem Aushärten erforderlich.

Damit diese aufgetragene Isolierschicht auf der Stromzuführung fest haftet, muss die Stromzuführung vor der Beschichtung gründlich gereinigt und oft einer Zusatzbehandlung wie beispielsweise Schleifen oder Sandstrahlen unterzogen werden, um die Haftfähigkeit zu verbessern.

Trotz dieser aufwändigen Bearbeitung und des Einsatzes von hochwertigen Spezialkunststoffen wie beispielsweise Halar™ werden derartige Isolierschichten durch scharfkantiges Behandlungsgut besonders beim Einsatz von automatischen Beschickungseinrichtungen für Galvanisierungsvorrichtungen immer wieder beschädigt. An diesen Beschädigungsstellen wird die Isolierung durchbrochen, und es wird Metall abgeschieden. Dieses Metall kann oft schon nach kurzer Zeit nicht mehr durch eine kostengünstige elektrolytische Entmetallisierung entfernt werden, weil bei diesem Verfahren häufig die leitende Verbindung an der meist relativ kleinflächigen Beschädigungsstelle unterbrochen wird, bevor alles abgeschiedene Metall in Lösung gehen kann. In diesem Fall müssen die betroffenen Stromzuführungen ausgebaut und chemisch entmetallisiert werden. Falls dies in zu kurzen Abständen erfolgen muss, wird die Stromzuführung durch eine neue ersetzt. Wurde für die Stromzuführung ein teures Metall verwendet, kommt eine aufwändige Aufarbeitung in Frage, bei der die nicht leitende Kunststoff-Isolierschicht durch Abschmelzen, Abbrennen oder mechanische Bearbeitung entfernt, die Metalloberfläche wieder aufbereitet und die Stromzuführung erneut mit einer Kunststoff-Isolierschicht beschichtet wird. Alle diese Arbeitsschritte sind aufwändig und sehr kostenintensiv.

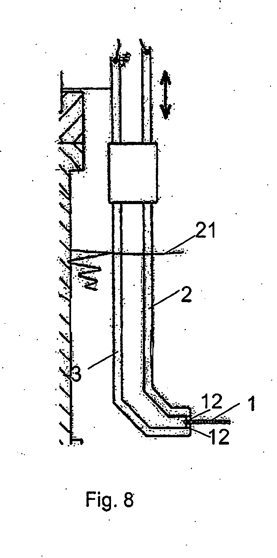

Ein Beispiel für eine derartige Stromzuführung ist in Figur 8 dargestellt. Dabei enden eine obere Stromzuführung 2 und eine untere Stromzuführung 3 jeweils in Kontaktelementen 12. Die untere Stromzuführung 3 ist beispielsweise an einer in einem Elektrolytbad umlaufenden Kette oder an einem Zahnriemen befestigt und bewegt sich durch einen entsprechenden Antrieb in die Zeichenebene hinein oder aus dieser heraus. Die obere Stromzuführung 2 ist in vertikaler Richtung beweglich gelagert, wie durch einen Pfeil angedeutet, und wird mittels einer Druckfeder nach unten gepresst. Durch die Stromzuführungen 2 und 3 wird somit eine Klammer gebildet, wobei die obere Stromzuführung 2 ein Klammeroberteil und die untere Stromzuführung 3 ein Klammerunterteil darstellt. Somit kann ein Behandlungsgut 1 zwischen die beiden Kontakte 12 eingeklemmt werden.

Über einen nicht dargestellten Hubklotz an der oberen Stromzuführung 2 kann über eine schiefe Ebene an einer oberen Führung der Stromzuführung die so gebildete Klammer beim Einlauf in eine Galvanisierungszone geschlossen und beim Verlassen dieser Zone wieder geöffnet werden. Beim Schließen ergreift die Klammer somit das Behandlungsgut 1 und stellt die elektrische Verbindung zu dem entsprechenden Pol der Stromversorgung her. Beim Verlassen der Galvanisierungszone wird die Stromzuführung wieder geöffnet, und das Behandlungsgut 1 wird mittels einer Rollenbahn weitertransportiert.

Um zu vermeiden, dass die metallischen oberen und unteren Stromzuführungen 2, 3 nicht galvanisiert werden und als Raubkathode wirken, sind diese wie oben beschrieben zumindest bis über den Flüssigkeitsspiegel 21 des Galvanisierungsbades mit der oben beschriebenen dünnen Kunststoff-Isolierschicht versehen. Diese Isolierungsschicht reicht bis an die Seitenfläche der Kontakte 12 heran.

Ein alternativer Lösungsansatz ist aus der DE 197 36 352 C1 bekannt. Hierbei werden Stromzuführungen aus blankem leitfähigem Material ohne eine Kunststoff-Isolierschicht verwendet. Um einen übermäßigen Niederschlag von Metall auf der Stromzuführung zu vermeiden, sind Blenden vorgesehen, die großflächig längs einer gesamten Galvanisierungszelle, in welcher die Stromzuführung eingesetzt wird, angeordnet sind. Die Befestigung der Blenden erfolgt dabei starr an einem Gehäuse der Galvanisierungszelle oder an den Anoden. Die Blenden sind zumindest an ihrer Oberfläche aus einem elektrisch isolierenden Material gefertigt und so angeordnet, dass nur eine geringe Wanderung der in dem Elektrolyten enthaltenen Ionen, insbesonder der Metallionen bei einem Galvanisieren, zu den Stromzuführungen hin stattfinden kann, da diese Ionen die elektrisch isolierenden Blenden nicht durchdringen können und kein Stromfluss durch diese hindurch stattfinden kann. Die Ionen nehmen vielmehr den Weg mit dem geringsten Widerstand, in diesem Fall den gewünschten Weg hin zum Behandlungsgut. In diesem Zusammenhang wird auch von einer Abschirmung der Feldlinien in dem Elektrolyten durch die Blenden gesprochen.

Eine Lücke in den Blenden muss dabei so angeordnet sein, dass ein Behandlungsgut mit einer maximalen Dicke, für welche die Vorrichtung ausgelegt ist, durch diese Lücke passt, ohne die Blenden zu berühren.

Wenn in der Anlage dünnes Behandlungsgut, d. h. mit einer Dicke kleiner der maximalen Dicke, behandelt wird, entsteht ein größerer Spalt zwischen dem Behandlungsgut und den Blenden. Dabei kann eine so große Ionenmenge zu den Kontaktelementen wandern, dass in der Nähe der Lücke trotz der Blenden relativ dicke Metallschichten von bis zu 0,1 mm Dicke und mehr pro Durchlauf an den Stromzuführungen abgeschieden werden können. Diese Metallschichten können dann bei einer nachfolgenden elektrolytischen Entmetallisierung wie oben erwähnt in der zur Verfügung stehenden Zeit bis zum nächsten Durchlauf nicht mehr entfernt werden.

Ein problemloses Entfernen einer solchen unerwünschten Metallschicht an oder bei den Kontaktelementen während dem Betrieb ist bei horizontalen Galvanisieranlagen zum Verkupfern von Leiterplatten bis etwa 0,04 mm Dicke problemlos möglich. Ab etwa 0,05 mm bis 0,1 mm Schichtdicke der unerwünschten Metallschicht kann die Schicht je nach Anlagenauslegung nicht mehr sicher von allen Stellen des Kontaktelementes entfernt werden. Die Schichten addieren sich bei den nachfolgenden Durchläufen und müssen in Betriebspausen aufwändig entfernt werden. Bei einer Schichtdicke dieser Schicht über 0,1 mm pro Durchlauf ist mit Störungen der Produktion zu rechnen.

Zudem ist bei dieser Ausführung nachteilig, dass sich die Blenden bei wie in Figur 8 angeordneten Stromzuführungen nicht mit den Greifbewegungen der Stromzuführungen zueinander mitbewegen können.

In der WO99/29931 ist eine klammerartige Haltevorrichtung zum lösbaren Halten von mittels Tauchgalvanisierung zu galvanisierenden Gegenständen wie Leiterplatten offenbart. Die Haltevorrichtung umfasst einen ersten Schenkel, einen zweiten Schenkel und einander zugewandte Kontaktstifte zum Kontaktieren und Einklemmen der Leiterplatten an unteren Endbereichen des ersten und zweiten Schenkels. An jedem der Kontaktstifte ist eine in Axialrichtung der Kontaktstifte elastisch verformbare Hülse, beispielsweise in Form eines Faltenbalges, fixiert, welche im entspannten Zustand über eine Kontaktfläche des Kontaktstiftes hervorsteht. Wenn die Klammer eine Leiterplatte einklemmt, legen sich die freien Enden der Hülsen dichtend an die Oberfläche der Leiterplatte an und verhindern somit, dass die Kontaktflächen mit dem galvanischen Bad in Berührung kommen, um so metallische Abscheidungen an den Kontaktflächen zu verhindern.

Die DE 42 11 253 A1 offenbart eine Galvanisiereinrichtung, wobei die zu galvanisierenden Werkstücke im horizontalen Durchlauf durch einen Elektrolyten transportiert werden. Die katodische Kontaktierung der durchlaufenden Werkstücke erfolgt dabei durch drehbare Kontaktierräder, wobei auf Stirnseiten der Kontaktierräder Abdeckungen aus isolierendem Material aufgebracht sind, um unerwünschte Metallabscheidungen auf den Stirnseiten zu verhindern.

In der DE 100 43 815 C2 ist ebenfalls eine Galvanisiereinrichtung offenbart. Dabei wird das Behandlungsgut von streifenförmigen Kontaktelementen kontaktiert. Es wird ein beispielsweise anvulkanisierter elektrisch isolierender Werkstoff verwendet, um ein unerwünschtes Metallisieren einer Kontaktleiste mit den Kontaktelementen zu vermeiden.

Auch in der DE 100 65 643 C2 werden Kontaktstreifen zum Kontaktieren von Behandlungsgut verwendet, wobei die Kontaktstreifen Kontaktisolierungen umfassen, welche die Kontaktstreifen bis auf eine eigentliche Kontaktfläche vollständig abdeckt.

In der WO 03/071009 A1 ist eine weitere Galvanisiereinrichtung offenbart, bei welcher eine elastische Kontaktleiste in einen elektrisch isolierenden Schaft eingebaut ist, wobei der isolierende Schaft die Kontaktleiste vor unerwünschter Metallisierung schützt.

Aus der DE 39 39 256 A1 ist eine Stromversorgungseinrichtung bekannt, bei welcher eine Beschichtung zum Schützen elektrisch leitender Teile verwendet wird. Zudem kommen faltenbalgähnliche Abdichtungen zum Einsatz, welche mit einem Halteelement verbunden sind und ein weiteres Halteelement im geschlossenen Zustand berühren.

Aus der CA 2 341 218 A1 ist eine Stromzuführung bekannt, welche mit einem Schutzlack geschützt ist.

Aus der US 3,616,447 sind hohlzylinderförmige Stromzuführungen bekannt, welche durch eine Beschichtung geschützt sein können.

Es ist daher eine Aufgabe der vorliegenden Erfindung, eine Stromversorgungseinrichtung für Behandlungsgut in einer Vorrichtung zur elektrochemischen Behandlung desselben bereitzustellen, bei der die Stromzuführungen möglichst effektiv vor dem Niederschlag von Metall geschützt sind, welche zudem einfach herzustellen und einfach und kostengünstig zu warten ist.

Diese Aufgabe wird gelöst durch eine Stromversorgungseinrichtung nach Anspruch 1. Die Unteransprüche definieren bevorzugte oder vorteilhafte Ausführungsbeispiele der Erfindung.

Erfindungsgemäß wird eine Stromversorgungseinrichtung mit mindestens einer Stromzuführung aus einem zumindest teilweise blankliegenden elektrisch leitfähigen Material, wobei an einem Ende der mindestens einen Stromzuführung Kontaktmittel zum elektrischen Kontaktieren eines Behandlungsgutes vorgesehen sind, bereitgestellt, wobei die Stromversorgungseinrichtung mindestens eine abnehmbare Schale umfasst, welche die mindestens eine Stromzuführung ausgehend von den Kontaktmitteln derart umschließt, dass bei einem Eintauchen der Stromzuführung in eine Flüssigkeit bei der elektrochemischen Behandlung beim Metallniederschlag von mehr als 0,04 mm an dem blankliegenden elektrisch leitfähigen Material entsteht, und wobei Befestigungsmittel zum Befestigen der Schale an der mindestens einen Stromzuführung vorgesehen sind. Der Abstand der Schale zu der Stromzuführung liegt dabei im Bereich 0,1 bis 4 mm, damit sich möglichst wenig Elektrolyt zwischen der Stromzuführung und der Schale ansammeln kann.

Dabei wird ausgenutzt, dass sich Metallionen in einem Elektrolyten sehr langsam bewegen. Deswegen müssen in galvanischen Hochleistungsbädern durch eine starke Elektrolytströmung ständig Metallionen an das Behandlungsgut herangebracht werden. Unterbleibt dies, verarmt der Elektrolyt an Metallionen und es findet keine oder nur noch eine geringe Metallabscheidung statt. Der elektrische Strom erzeugt stattdessen Wasserstoff an der Kathode.

Dies bedeutet, dass zum Verhindern einer Metallbeschichtung der Stromzuführungen während eines Galvanisierungsprozesses nicht unbedingt eine absolut flüssigkeitsdichte Ummantelung erforderlich ist. Es müssen lediglich die Metallionen am Nachwandern zu dem blankliegenden Material gehindert werden.

In anderen Worten benutzt die erfindungsgemäße Stromversorgungseinrichtung eine in etwa formschlüssige Schale um die Stromzuführung herum, welche die Metallionen an einem Nachwandern zu dem blankliegenden elektrisch leitfähigen Material hindert.

Diese Schale kann separat von den Stromzuführungen gefertigt werden und an diesen mit Befestigungsmitteln wie z. B. Schrauben oder durch Einklipsen befestigt werden. Dies bedingt zum einen eine einfachere Herstellung, zum anderen können beschädigte Schalen leicht ausgetauscht werden. Die mindestens eine Schale wird dabei bevorzugt durch Spritzguss, Tiefziehen in vorgefertigte Formen, automatisches Formfräsen oder selektives Lasersintern eines Kunststoffs mit einem Wandstärke von 0,2 mm bis 8 mm gefertigt.

Die mindestens eine Schale kann dabei aus mehreren Teilen gebildet sein, welche mittels einer Dichtung oder mittels ineinander greifender Abschnitte miteinander verbunden werden. Dadurch wird eine hinreichende Behinderung eines der Nachwanderung von Ionen im Elektrolyten und somit ein Verhindern des unerwünschten und störenden Metallniederschlags von mehr als 0,04 mm Dicke erreicht. Eine derartige Schale kann insbesondere für mechanisch beanspruchte Abschnitte der mindestens einen Stromzuführung verwendet werden, während nicht mechanisch beanspruchte Teile auch mit einer isolierenden Beschichtung versehen sein können. Die Stromversorgungseinrichtung kann insbesondere zwei bevorzugt starre und/oder L-förmige Stromzuführungen umfassen, welche relativ zueinander bewegbar sind und somit als Klammer zum Festhalten eines Behandlungsguts dienen können. Hierfür kann ein Federmechanismus vorhanden sein.

Die Stromzuführungen selbst sind dabei bevorzugt aus Titan oder Edelstahl gefertigt, da diese Metalle gegen die bei Galvanisierungsverfahren üblicherweise eingesetzten Chemikalien beständig sind. Bei entsprechenden Elektrolyten kann jedoch auch besser leitendes Material wie Kupfer als Material für die Stromzuführung verwendet werden.

Versuche mit einer erfindungsgemäßen Stromversorgungseinrichtung haben gezeigt, dass der Metallniederschlag an dem blankliegenden elektrisch leitfähigen Material ohne Verwendung von zusätzlichen Kunststoffdichtungen im Bereich des Behandlungsgutes im Durchschnitt bei nur noch 0,005 mm pro Durchlauf lag, also weit unterhalb der Grenze von 0,04 mm. Eine Verringerung der Metallschicht am Behandlungsgut durch den bereits in der Einleitung beschriebenen Raubkathodeneffekt konnte nicht festgestellt werden.

Die Erfindung wird im Folgenden unter Bezugnahme auf die beigefügte Zeichnung anhand bevorzugter Ausführungsbeispiele näher erläutert. Es zeigen:
Figur 1 eine erfindungsgemäße Stromversorgungseinrichtung mit zwei Schalenteilen,
Figur 2 die Stromversorgungseinrichtung von Figur 1 in einer um 90° gedrehten Ansicht,
Figuren 3a-3c eine bevorzugte Ausführungsform eines Schalenteils aus den Figuren 1 und 2 am Ausschnitt A der Figur 1 von vorne, seitlich und als Schnitt von oben,
Figuren 4a-4c eine bevorzugte Ausführungsform eines anderen Schalenteils aus Figur 1 in denselben Ansichten wie Figuren 3a-3c,
Figuren 5a-5d die Schalenteile aus Figuren 4a-4c und 5a-5c in Kombination miteinander,
Figur, 6 ausschnittsweise einen Warenträger einer vertikal arbeitenden Galvanisierungsanlage, bei welcher erfindungsgemäße Stromversorgungseinrichtungen verwendet werden können,
Figur 7 eine vergrößerte Darstellung von erfindungsgemäßen Stromversorgungseinrichtungen an langgestreckten Stromzuführungen der Figur 6, und
Figur 8 eine Stromversorgungseinrichtung gemäß dem Stand der Technik.

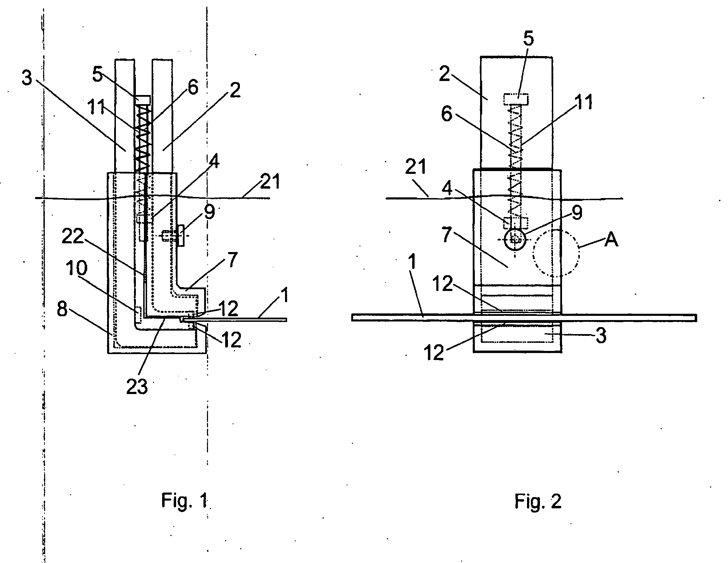

In Figur 1 ist ein Ausführungsbeispiel einer erfindungsgemäßen Stromversorgungseinrichtung in der gleichen Ansicht wie in der in der Beschreibungseinleitung beschriebenen Figur 8 dargestellt. Für einander entsprechende Elemente werden die gleichen Bezugszeichen verwendet. Ein Behandlungsgut 1 wird durch eine Klammer, welche aus einer oberen Stromzuführung oder einem Klammeroberteil 2 und einer unteren Stromzuführung oder einem Klammerunterteil 3 gebildet ist, gehalten und elektrisch kontaktiert, wobei das Klammeroberteil 2 und das Klammerunterteil 3 jeweils aus einem gut leitfähigen blanken Material bestehen. Am Klammeroberteil 2 ist ein Führungsklotz 4 starr befestigt, in welchem eine Federführung 11 in einer Bohrung in vertikaler Richtung beweglich gelagert ist. Das Klammerunterteil 3 weist einen starr befestigten Federklotz 5 auf, in welchen die Federführung 11 fest eingespannt ist. Zwischen den beiden Klötzen 4 und 5 ist eine Feder auf der Federführung 11 angeordnet und drückt das Klammeroberteil 2 gegen das Klammerunterteil 3. An einem vorderen Ende des Klammeroberteils 2 und des Klammerunterteils 3 sind Kontaktmittel oder Kontaktelemente 12 elektrisch leitfähig mit dem Klammerober- bzw. -unterteil leitend verbunden. Das Behandlungsgut 1 wird zwischen diesen Kontaktelementen 12 eingespannt, und elektrischer Strom kann von dem Klammeroberteil 2 und dem Klammerunterteil 3 auf das Behandlungsgut 1 übertragen werden. Das Einspannen des Behandlungsguts 1 kann auch dazu dienen, es zu transportieren.

Ausgehend von dem Kontaktelement 12 ist ein Schalenteil 8, welche das Klammerunterteil 3 mit geringem Abstand umgibt, an diesem befestigt. Das Schalenteil 8 ist dabei so ausgelegt, dass es in einer Vorrichtung zur elektrochemischen Behandlung zumindest über einen Flüssigkeitsspiegel 21 eines Elektrolyten reicht. Eine Befestigung des Schalenteils 8 an dem Klammerunterteil 3 kann beispielsweise mittels einer Schraube aus Kunststoff oder mit an dem Schalenteil 8 ausgebildeten Klipps 10 erfolgen, welche hinter einer Innenkante des Klammerunterteils 3 einrasten. Das Schalenteil 8 verhindert ein Nachwandern von Metallionen aus dem das Klammerunterteil 3 umgebenden Elektrolyten zu einer Außenseite des Klammerunterteils 3, was, wie in der Beschreibungseinleitung dargelegt, gleichzeitig zu einer Abschirmung von zwischen einer (nicht gezeigten) Anode und dem Behandlungsgut bzw. den Stromzuführungen ausgebildeten elektrischen Feldlinien führt. Im vorliegenden Beispiel ist das Schalenteil 8 auf der dem Klammeroberteil zugewandten Seite offen. Prinzipiell ist aber auch eine geschlossene Ausführung, welche das Klammerunterteil 3 vollständig umgibt, denkbar.

In gleicher Weise ist am Klammeroberteil 2 ein Schalenteil 7 angebracht, welches zumindest auf der Außenseite, d. h. auf der dem Klammerunterteil 3 abgewandten Seite, eng am Klammeroberteil 2 anliegt, um eine mögliche Ansammlung des Elektrolyten zwischen dem Schalenteil 7 und dem Klammeroberteil 2 möglichst gering zu halten. Der Schalenteil 7 ist in diesem Beispiel mittels der Kunststoffschraube 9 am Klammeroberteil befestigt. Wenn die Schale hinreichend eng anliegt, ist die Befestigung mit einer einzelnen Kunststoffschraube 9 ausreichend.

Das Schalenteil 7 ist - ähnlich dem Schalenteil 8 - in dem dem Klammerunterteil 3 zugewandten Bereich offen.

An den Berührungsstellen der Schalenteile 7 und 8 ausgebildete Gleitflächen 22 gleiten beim Öffnen und Schließen der durch das Klammeroberteil 2 und das Klammerunterteil 3 gebildeten Klammer schlüssig aneinander, so dass hier eine gute elektrische Isolierung, eine Flüssigkeitsdichtung, die ein Nachwandern der Metallionen verhindert, und auch eine gute Abschirmung der elektrischen Feldlinien gewährleistet ist. Die waagerechten Abschnitte, an denen die Schalenteile 7 und 8 aufeinander treffen, sind als Schließflächen 23 ausgebildet. Diese Schließflächen 23 sind im vorderen Teil, in dem Bereich, wo das Behandlungsgut 1 festgehalten und kontaktiert wird, soweit wie erforderlich ausgespart, um eine gute Befestigung und Kontaktierung des Behandlungsgutes 1 zu ermöglichen. Die ausgesparten Flächen der Schalenteile 7, 8 liegen im geschlossenen Zustand der Klammer nahe Behandlungsgut 1, ohne dieses zu berühren, so dass auch hier eine relativ gute Abdichtung gegeben ist. Bei Bedarf kann der noch vorhandene kleine Spalt beispielsweise durch eine Weichkunststoffdichtung wie weiter unten beschrieben zusätzlich abgedichtet werden. Das gleiche gilt für die übrigen, dem Behandlungsgut zugewandten Flächen der Schalenteile 7 und 8, um dort vorhandene Zwischenräume abzudichten.

Somit bilden die Schalenteile 7 und 8 eine Schale, welche die Stromzuführungen 2 und 3 ausgehend von den Kontaktelementen 12 derart umgibt, dass das Nachwandern von Metallionen aus dem außerhalb der Schale befindlichen Elektrolyten im Wesentlichen verhindert wird.

In Figur 1 ist die Stromversorgungseinrichtung von Figur 1 in einer um 90° horizontal nach links gedrehten Ansicht gezeigt, wobei die durch das Klammeroberteil 2 und das Klammerunterteil 3 gebildete Klammer ebenfalls in einem geschlossenen Zustand ist und das Behandlungsgut 1, beispielsweise eine Leiterplatte, festhält. Das Behandlungsgut 1 ist mittels der Kontaktelemente 12 zwischen dem Klammeroberteil 2 und dem Klammerunterteil 3 mittels der Druckfeder 6 mit einer guten elektrischen Verbindung eingeklemmt. In Figur 2 ist deutlich zu sehen, dass am vorderen Ende eine Aussparung, wie oben bereits erläutert, in mindestens einer der Schalenteile 7, 8 vorgesehen ist, damit das Behandlungsgut 1 festgehalten werden kann. Da die Schalenteile 7, 8 an den Klammerteilen 2, 3 befestigt sind, bewegen sie sich beim Öffnen und Schließen mit den Klammerteilen mit. Dadurch ist der kleine Abstand der Aussparungsflächen zum Behandlungsgut, welcher ca. 0,05 - 0,3 mm beträgt, immer gleich, unabhängig von der Dicke des Behandlungsgutes 1.

Wie oben erläutert, liegen die Gleitflächen 22 und die Schließflächen 23 möglichst aneinander an, um eine gute Abdichtung zu gewährleisten. Im Folgenden werden Möglichkeiten dargestellt, diese Abdichtung noch zu verbessern.

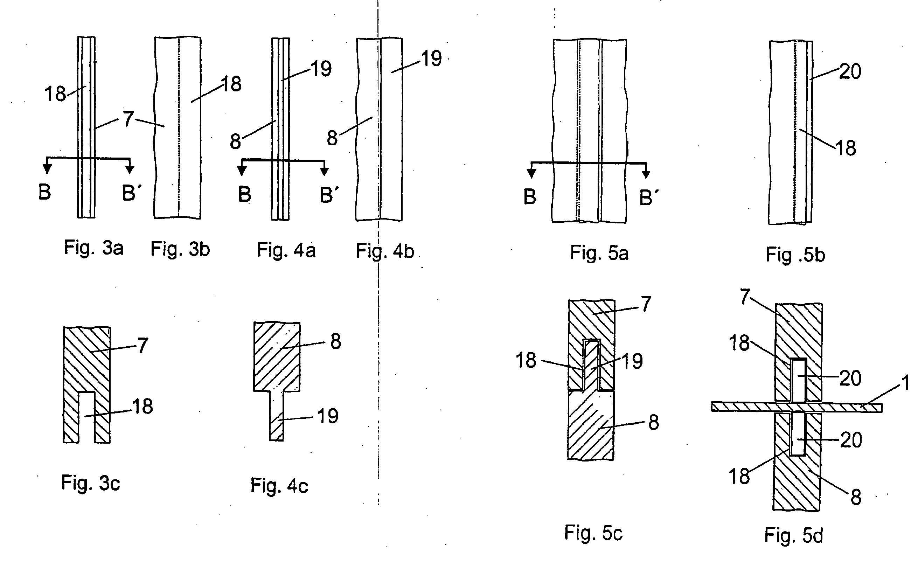

Dabei zeigt die Figur 3 eine mögliche Ausgestaltung des Schalenteils 7, die Figur 4 eine mögliche Ausgestaltung des Schalenteils 8 und die Figur 5 das Zusammenwirken der derart ausgestalteten Schalenteile 7 und 8. Die Figuren 3a, 4a und 5a zeigen dabei den Ausschnitt A aus Figur 2 in der dort dargestellten Blickrichtung, d. h. in die Zeichenebene von Figur 2 hinein. Die Figuren 3b, 4b und 5b zeigen eine entsprechende Seitenansicht und die Figuren 3c, 4c und 5c eine Schnittansicht entlang der jeweiligen Linie B-B' der jeweils zugehörigen Figur a, d. h. eine Draufsicht. Wie in den Figuren dargestellt, weist beispielsweise der Schalenteil 7 eine Nut 18 und der Schalenteil 8 einen Steg 19 auf. Selbstverständlich können diese Ausgestaltungen auch umgedreht sein. Wie in Figur 5c gezeigt, greift der Steg 19 des Schalenteils 8 in die Nut 18 des Schalenteils 7. Im Bereich der Gleitflächen 22 ist dieses Ineinandergreifen ständig gegeben. Bei Anwendung dieser Ausgestaltung auf die Schließflächen 23 werden beim Schließen der Klammer der Steg 19 und die Nut 18 ineinander geschoben und beim Öffnen wieder auseinander gezogen. Durch eine derartige Ausgestaltung wird eine noch bessere Abdichtung zwischen den Schaltenteilen 7 und 8 erreicht. Somit kann kaum Elektrolyt zu dem Klammeroberteil 2 oder dem Klammerunterteil 3 vordringen.

Unmittelbar im Bereich der Kontaktelemente 12 ist eine derartige Ausgestaltung nicht möglich, weil hier das Behandlungsgut 1 eingespannt wird. Hier kann eine Abdichtung beispielsweise wie in Figur 5d gezeigt erfolgen. Dabei weisen sowohl der Schalenteil 7 als auch der Schalenteil 8 eine Nut 18 auf, in welche ein Dichtkunststoffstreifen 20 eingeklemmt, eingelegt oder eingeklebt ist. Ist die Klammer geschlossen, drücken die Dichtkunststoffstreifen 20 gegen das Behandlungsgut 1 und dichten somit die Berührungsflächen in diesem Bereich ab, ohne die sichere elektrische Kontaktierung des Behandlungsgutes 1 wesentlich zu beeinflussen. Für eine derartige Dichtung sind Weichkunststoffe, Weichgummi oder Schaumstoffe geeignet. Es ist darauf zu achten, dass eine Beständigkeit gegenüber im Elektrolyten vorhandenen Chemikalien gewährleistet ist.

Alternativ können im Berührungsbereich der Schalenteile 7 und 8 Flach- oder Runddichtungen vorgesehen sein, welche für eine möglichst gute Abdichtung bzw. Abschirmung sorgen.

Oft erfolgt der Schließvorgang der Klammer erst, wenn die Klammer bereits in den Elektrolyten eingetaucht ist. Somit ist der Innenraum der Schalen mit Elektrolyt gefüllt. Dies führt wegen der relativ guten Abschirmung der Feldlinien und der Abdichtung und dem daraus folgenden geringen Nachwandern von Metallionen nur zu einem geringen Metallniederschlag, welcher auf einfache Weise elektrochemisch entfernt werden kann.

Prinzipiell kann die durch die Schalenteile 7 und 8 gebildete Schale auch nur in einem Bereich vorhanden sein, in welchem Beschädigungen der Schalenteile beispielsweise beim Be- oder Entladen des Behandlungsguts 1 zu erwarten sind. In anderen Bereichen, in denen keine Beschädigung stattfinden kann, kann ein herkömmlicher Kunststoffüberzug vorgesehen sein.

Im Folgenden wird nun ein weiteres Ausführungsbeispiel der Erfindung erläutert.

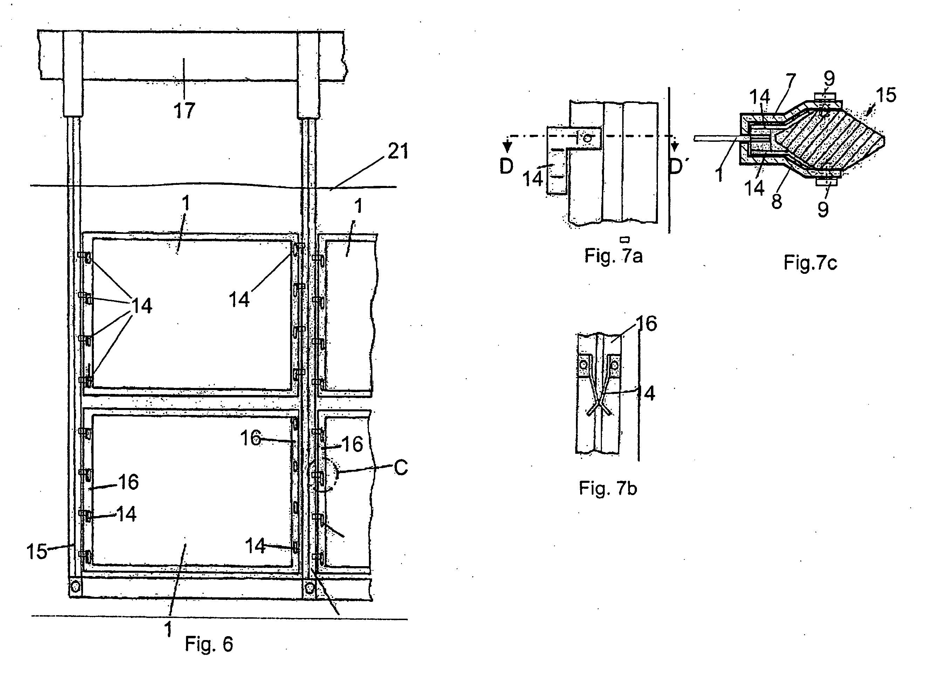

Figur 6 zeigt ausschnittsweise einen Warenträger mit einer Warenträgerschiene 17 und langgestreckten Gestellstäben 15, wie sie zur Galvanisierung von flachem Behandlungsgut 1 in so genannten vertikalen Taubadgalvanisieranlagen Verwendung finden. Die Gestellstäbe 15 sind aus einem leitenden Material und allseitig mit einer isolierenden Schicht zumindest bis über den Flüssigkeitsspiegel 21 des Elektrolytbades nach oben reichend versehen.

An jedem Gestellstab 15 sind mit dem metallischen Gestellstab 15 gut leitend verbundene Klemmfedern 14 angebracht. Figur 7a zeigt eine Ausschnittsvergrößerung des gestrichelten Kreises C aus Figur 6. Wie zu sehen ist, besteht eine Klemmfeder 14 aus einem rechtwinklig geformten Blech, welches am Gestellstab 15 angeschraubt, angeschweißt oder vernietet ist. Jeweils zwei dieser Federelemente 14 sind genau gegenüberliegend am Gestellstab 15 befestigt und können somit das Behandlungsgut 1 an seinem Rand 16 einklemmen. In diesem Beispiel bilden die Warenträgerschiene 17, der Gestellstab 15 und die Klemmfedern 14 eine Stromzuführung zum Behandlungsgut. Herkömmlich sind diese Klemmfedern ebenfalls mit einem Kunststoffüberzug versehen, und nur ein kleiner Bereich der Klemmstelle bleibt für die Stromübertragung blank. Dies führt wiederum zu den in der Beschreibungseinleitung dargelegten Nachteilen.

Figur 7c zeigt einen Schnitt des Gestellstabes entlang einer Linie D-D' von Figur 7a. Wiederum sind entsprechend der vorliegenden Erfindung Schalenteile 7 und 8 zumindest im Bereich der Klemmfedern 14 vorhanden. Die Abdichtung der Schalenteile 7 und 8 zueinander und zu dem Behandlungsgut 1 kann wie in den Figuren 3-5 beschrieben erfolgen.

In diesem Ausführungsbeispiel entsprechen also die Kontaktstellen der Klemmfeder 14 den Kontaktelementen 12 des Ausführungsbeispiels der Figuren 15 und der Rest der Klemmfeder 14 entspricht den Stromzuführungen 2 und 3.

Da die Gestellstäbe 15 meist eine Länge von mehr als 600 mm aufweisen, kann es hier vorteilhaft sein, die Schalenteile 7, 8 mehrteilig zu fertigen und die Fügestellen in der vorbeschriebenen Art zu gestalten. Die Befestigung kann wiederum mit Schrauben 9 aus nicht leitendem Material erfolgen.

Selbstverständlich ist die Anwendung der Erfindung nicht auf die hier dargestellten Ausführungsbeispiele beschränkt. Insbesondere können verschiedene Formen und Arten von Stromzuführungen auf die erfindungsgemäße Weise vor Niederschlag geschützt werden.

Die Erfindung wurde vorstehend am Beispiel von Galvanisierungsvorrichtungen beschrieben. Der Einsatz einer erfindungsgemäßen Stromversorgungseinrichtung ist aber auch für andere Arten elektrochemischer Behandlung wie das eingangs beschriebene Ätzen möglich.

### BEZUGSZEICHEN:

- 1: Behandlungsgut
- 2: Obere Stromzuführung bzw. Klammeroberteil
- 3: Untere Stromzuführung bzw. Klammeroberteil
- 4: Führungsklotzoberteil
- 5: Federklotzunterteil
- 6: Druckfeder
- 7: Schalenteil
- 8: Schalenteil
- 9: Befestigungsschraube
- 10: Klipp
- 11: Federführung
- 12: Kontaktelement
- 14: Klemmfeder
- 15: Gestellstab
- 16: Rand
- 17: Wagenträgerschiene
- 18: Nut
- 19: Steg
- 20: Dichtung
- 21: Flüssigkeitsspiegel
- 22: Gleitflächen
- 23: Schließflächen

## Patentansprüche

1. Stromversorgungseinrichtung für Behandlungsgut (1) in einer Vorrichtung zur elektrochemischen Behandlung desselben,
mit mindestens einer Stromzuführung (2,3; 14) aus einem zumindest teilweise blankliegenden elektrisch leitfähigen Material,
wobei an einem Ende der mindestens einen Stromzuführung (2, 3; 14) Kontaktmittel (12; 14) zum elektrischen Kontaktieren des Behandlungsguts (1) vorgesehen sind, **dadurch gekennzeichnet,**
**dass** die Stromversorgungseinrichtung mindestens eine elektrisch isolierende abnehmbare Schale (7, 8) umfasst, welche von der mindestens einen Stromzuführung (2; 3; 14) zwischen 0,1 und 4 mm beabstandet ist und die mindestens eine Stromzuführung (2, 3; 14) ausgehend von den Kontaktmitteln (12; 14) für eine bestimmte Länge derart umschließt, dass bei einem Eintauchen der Stromzuführung (2, 3; 14) in eine Flüssigkeit bis zu dieser bestimmten Länge bei der elektrochemischen Behandlung des Behandlungsgutes (1) kein Metallniederschlag von mehr als 0,04 mm an den blankliegenden Teilen des elektrisch leitfähigen Materials entsteht, und
**dass** Befestigungsmittel (9, 10) zum Befestigen der mindestens einen Schale an der mindestens einen Stromzuführung (2, 3; 14) vorgesehen sind.

2. Stromversorgungseinrichtung nach Anspruch 1,
**dadurch gekennzeichnet,**
**dass** die mindestens eine Schale (7, 8) die mindestens eine Stromzuführung (2, 3; 14) derart umschließt,
**dass** bei einem Eintauchen der Stromzuführung in eine elektrolytische Flüssigkeit und Anlegen einer Spannung an die Stromzuführung (2, 3; 14) keine wesentliche Wanderung von Ionen von außerhalb der Schale zu den blankliegenden Teilen des elektrisch leitfähigen Materials stattfindet.

3. Stromversorgungseinrichtung nach Anspruch 1 oder 2,
**dadurch gekennzeichnet,**
**dass** die Schale (7,8) separat von der mindestens einen Stromzuführung (2, 3; 14) gefertigt ist.

4. Stromversorgungseinrichtung nach einem der vorhergehenden Ansprüche,
**dadurch gekennzeichnet,**
**dass** die mindestens eine Schale (7, 8) an der mindestens einen Stromzuführung (2, 3; 14) im Wesentlichen formschlüssig anliegt.

5. Stromversorgungseinrichtung nach einem der vorhergehenden Ansprüche,
**dadurch gekennzeichnet,**
**dass** die mindestens eine Schale (7, 8) eine Wandstärke von 0,2 mm bis 5 mm aufweist.

6. Stromversorgungseinrichtung nach einem der vorhergehenden Ansprüche,
**dadurch gekennzeichnet,**
**dass** die mindestens eine Schale (7, 8) durch Spritzguss, Tiefziehen in vorgefertigte Formen, automatisches Formfräsen oder selektives Lasersintern gefertigt ist.

7. Stromversorgungseinrichtung nach einem der vorhergehenden Ansprüche,
**dadurch gekennzeichnet,**
**dass** die mindestens eine Schale (7, 8) aus einem Kunststoffmaterial gefertigt ist.

8. Stromversorgungseinrichtung nach einem der vorhergehenden Ansprüche,
**dadurch gekennzeichnet,**
**dass** die mindestens eine Schale (7, 8) aus mindestens zwei Teilen (7, 8) gebildet ist.

9. Stromversorgungseinrichtung nach Anspruch 8,
**dadurch gekennzeichnet,**
**dass** eine Verbindung zwischen den mindestens zwei Teilen (7, 8) mittels einer Dichtung erfolgt.

10. Stromversorgungseinrichtung nach Anspruch 8 oder 9,
**dadurch gekennzeichnet,**
**dass** eine Verbindung zwischen den mindestens zwei Teilen (7,8) mittels ineinandergreifender Abschnitte der mindestens zwei Teile erfolgt.

11. Stromversorgungseinrichtung nach einem der vorhergehenden Ansprüche,
**dadurch gekennzeichnet,**
**dass** die mindestens eine Schale (7, 8) keine wesentliche Flexibilität aufweist.

12. Stromversorgungseinrichtung nach einem der vorhergehenden Ansprüche,
**dadurch gekennzeichnet,**
**dass** die mindestens eine Schale (7, 8) mechanisch beanspruchte Abschnitte der mindestens einen Stromzuführung (2, 3; 14) umschließt, während nicht mechanisch beanspruchte Teile der mindestens einen Stromzuführung (2, 3; 15) mit einer isolierenden Beschichtung versehen sind.

13. Stromversorgungseinrichtung nach einem der vorhergehenden Ansprüche,
**dadurch gekennzeichnet,**
**dass** die mindestens eine Stromzuführung (2,3) L-förmig ausgebildet ist.

14. Stromversorgungseinrichtung nach einem der vorhergehenden Ansprüche,
**dadurch gekennzeichnet,**
**dass** in der mindestens einen Schale (7, 8) in einem Abschnitt, an dem die Kontaktmittel (12) mit der mindestens einen Stromzuführung verbunden sind, eine Dichtung (20) zum flüssigkeitsdichten Abdichten eines Zwischenraums zwischen der mindestens einen Schale (7, 8) und dem von den Kontaktmitteln (12) kontaktiertem Behandlungsgut (1) angeordnet ist.

15. Stromversorgungseinrichtung nach einem der vorhergehenden Ansprüche,
**dadurch gekennzeichnet,**
**dass** die mindestens eine Stromzuführung (2, 3) eine erste Stromzuführung (2) mit ersten Kontaktmitteln (12) und eine zweite Stromzuführung (3) mit zweiten Kontaktmitteln (12) umfasst,
wobei die erste (2) und die zweite (3) Stromzuführung relativ zueinander bewegbar sind, womit das Behandlungsgut (1) zwischen den ersten und den zweiten Kontaktmitteln (12) festgehalten werden kann.

16. Stromversorgungseinrichtung nach Anspruch 15,
**dadurch gekennzeichnet,**
**dass** die erste Stromzuführung (2) und die zweite Stromzuführung (3) durch einen Federmechanismus(4, 5, 6, 11) relativ zueinander bewegbar sind.

17. Stromversorgungseinrichtung nach einem der vorhergehenden Ansprüche,
**dadurch gekennzeichnet,**
**dass** die mindestens eine Stromzuführung (2, 3; 14) aus Titan, Edelstahl oder Kupfer gefertigt ist.

18. Stromversorgungseinrichtung nach einem der vorhergehenden Ansprüche,
**dadurch gekennzeichnet,**
**dass** die mindestens eine Stromzuführung (2, 3) keine wesentliche Flexibilität aufweist.

19. Vorrichtung zur elektrochemischen Behandlung von Behandlungsgut,
**dadurch gekennzeichnet,**
**dass** die Vorrichtung eine Stromversorgungseinrichtung für das Behandlungsgut (1) nach einem der Ansprüche 1 bis 18 umfasst.

20. Vorrichtung nach Anspruch 19,
**dadurch gekennzeichnet,**
**dass** die Vorrichtung zum Galvanisieren des Behandlungsguts (1) ausgestaltet ist.

21. Vorrichtung nach Anspruch 19 oder 20,
**dadurch gekennzeichnet,**
**dass** die Vorrichtung zur kontinuierlichen Behandlung des Behandlungsguts ausgestaltet ist.

## Claims

1. Power supply device for a material to be treated (1) in an apparatus for electrochemical treatment thereof,
with at least one current lead (2, 3; 14) of an at least partially bare electrically conductive material,
wherein at one end of the at least one current lead (2, 3;, 14) contact means (12; 14) are provided for electrically contacting the material to be treated (1),
**characterized in that**
the power supply device comprises at least one electrically insulating removable shell (7, 8), which is spaced between 0.1 and 4 mm from the at least one current lead (2; 14; 3) and encloses the at least one current lead (2, 3; 14) starting from the contact means (12; 14) for a certain length, such that when immersing the current lead (2, 3; 14) into a liquid up to that certain length, no metal deposit of more than 0.04 mm at the bare parts of the electrically conductive material is formed during the electrochemical treatment of the material to be treated (1), and
fastening means (9, 10) for fastening the at least one shell are provided at the at least one current lead (2, 3; 14).

2. Power supply device according to claim 1,
**characterized in that**
the at least one shell (7, 8) encloses the at least one current lead (2, 3; 14) such that no substantial migration of ions from outside the shell to the bare parts of the electrically conductive material takes place when immersing the current lead in an electrolytic liquid and applying a voltage to the current lead (2, 3; 14).

3. Power supply device according to claim 1 or 2,
**characterized in that**
the shell (7,8) is made separately from the at least one current lead (2, 3; 14).

4. Power supply device according to any one of the preceding claims,
**characterized in that**
the at least one shell (7, 8) substantially form-fits to the at least one current lead (2, 3; 14).

5. Power supply device according to any one of the preceding claims,
**characterized in that**
the at least one shell (7, 8) has a wall thickness of 0.2 mm to 5 mm.

6. Power supply device according to any one of the preceding claims,
**characterized in that**
the at least one shell (7, 8) is made by injection moulding, deep drawing into prefabricated shapes, automatic form milling or selective laser sintering.

7. Power supply device according to any one of the preceding claims,
**characterized in that**
the at least one shell (7, 8) is made of a plastic material.

8. Power supply device according to any one of the preceding claims,
**characterized in that**
the at least one shell (7, 8) is formed of at least two parts (7, 8).

9. A power supply device according to claim 8,
**characterized in that**
a connection between the at least two parts (7, 8) takes place by means of a seal.

10. Power supply device according to claim 8 or 9, **characterized in that**
a connection between the at least two parts (7, 8) takes place by means of engaging portions of the at least two parts.

11. Power supply device according to any one of the preceding claims,
**characterized in that**
the at least one shell (7, 8) has no significant flexibility.

12. Power supply device according to any one of the preceding claims,
**characterized in that**
the at least one shell (7, 8) encloses mechanically stressed portions of the at least one current lead (2, 3, 14), whereas mechanically non-stressed portions of the at least one current lead (2, 3; 15) are provided with an insulating coating.

13. Power supply device according to any one of the preceding claims,
**characterized in**
**that** the at least one current lead (2,3) is L-shaped.

14. Power supply device according to any one of the preceding claims,
**characterized in that**
in the at least one shell (7, 8) in a portion, where the contact means (12) are connected to the at least one current lead, a seal (20) for liquid-tight sealing of a space is arranged between the at least one shell (7, 8) and the material to be treated (1) contacted by the contact means (12).

15. Power supply device according to any one of the preceding claims,
**characterized in that**
the at least one current lead (2, 3) comprises a first current lead (2) having first contact means (12) and a second current lead (3) having second contact means (12),
wherein the first (2) and the second (3) current lead are movable relative to each other, whereby the material to be treated (1) can be held between the first and second contact means (12).

16. Power supply device according to claim 15,
**characterized in that**
the first current lead (2) and the second current lead (3) are moveable relative to each other by means of a spring mechanism (4, 5, 6, 11).

17. Power supply device according to any one of the preceding claims,
**characterized in that**
the at least one current lead (2, 3; 14) is made of titanium, stainless steel or copper.

18. Power supply device according to any one of the preceding claims,
**characterized in that**
the at least one current lead (2, 3) has no substantial flexibility.

19. Apparatus for electrochemical treatment of a material to be treated,
**characterized in that**
the apparatus comprises a power supply device for the material to be treated (1) according to any one of claims 1 to 18.

20. Apparatus of claim 19,
**characterized in that**
the apparatus is configured to galvanize the material to be treated (1).

21. Apparatus according to claim 19 or 20,
**characterized in that**
the apparatus is configured for the continuous treatment of the material to be treated.

## Revendications

1. Dispositif d'alimentation électrique pour produit à traiter (1) dans un appareil de traitement pour le traitement électrochimique de celui-ci,
avec au moins une amenée de courant (2, 3 ; 14) en un matériau électriquement conducteur au moins partiellement à nu,
des moyens de contact (12 ; 14) pour l'établissement d'un contact électrique avec le produit à traiter (1) étant prévus à une extrémité de l'au moins une amenée de courant (2, 3 ; 14),
**caractérisé en ce**
**que** le dispositif d'alimentation électrique comprend au moins une enveloppe (7, 8) amovible électriquement isolante espacée de l'au moins une amenée de courant (2 ; 3 ; 14) entre 0,1 et 4 mm, et qui entoure l'au moins une amenée de courant (2, 3 ; 14) en partant des moyens de contact (12 ; 14) sur une longueur définie de sorte que, en cas d'immersion de l'amenée de courant (2, 3 ; 14) dans un liquide jusqu'à cette longueur définie lors du traitement électrochimique du produit à traiter (1), aucun dépôt de métal de plus de 0,04 mm ne se forme au niveau des parties à nu du matériau électriquement conducteur, et
**que** sont prévus des moyens de fixation (9, 10) pour fixer l'au moins une enveloppe sur l'au moins une amenée de courant (2, 3 ; 14).

2. Dispositif d'alimentation électrique selon la revendication 1,
**caractérisé en ce**
**que** l'au moins une enveloppe (7, 8) entoure l'au moins une amenée de courant (2, 3 ; 14) de telle sorte
**que**, en cas d'immersion de l'amenée de courant dans un liquide électrolytique et d'application d'une tension au niveau de l'amenée de courant (2, 3 ; 14), il ne se produise pas de migration importante d'ions de l'extérieur de l'enveloppe vers les parties à nu du matériau électriquement conducteur.

3. Dispositif d'alimentation électrique selon la revendication 1 ou 2,
**caractérisé en ce**
**que** l'enveloppe (7, 8) est fabriquée séparément de l'au moins une amenée de courant (2, 3 ; 14).

4. Dispositif d'alimentation électrique selon l'une des revendications précédentes,
**caractérisé en ce**
**que** l'au moins une enveloppe (7, 8) épouse sensiblement la forme de l'au moins une amenée de courant (2, 3 ; 14).

5. Dispositif d'alimentation électrique selon l'une des revendications précédentes,
**caractérisé en ce**
**que** l'au moins une enveloppe (7, 8) comprend une épaisseur de paroi de 0,2 mm à 5 mm.

6. Dispositif d'alimentation électrique selon l'une des revendications précédentes,
**caractérisé en ce**
**que** l'au moins une enveloppe (7, 8) est fabriquée par moulage par injection, emboutissage profond dans des moules préfabriqués, fraisage de forme automatique ou frittage sélectif au laser.

7. Dispositif d'alimentation électrique selon l'une des revendications précédentes,
**caractérisé en ce**
**que** l'au moins une enveloppe (7, 8) est fabriquée en une matière plastique.

8. Dispositif d'alimentation électrique selon l'une des revendications précédentes,
**caractérisé en ce**
**que** l'au moins une enveloppe (7, 8) est formée d'au moins deux parties (7, 8).

9. Dispositif d'alimentation électrique selon la revendication 8,
**caractérisé en ce**
**qu'**une liaison entre les au moins deux parties (7, 8) a lieu à l'aide d'un joint.

10. Dispositif d'alimentation électrique selon la revendication 8 ou 9,
**caractérisé en ce**
**qu'**une liaison entre les au moins deux parties (7, 8) a lieu à l'aide de sections qui s'imbriquent des au moins deux parties.

11. Dispositif d'alimentation électrique selon l'une des revendications précédentes,
**caractérisé en ce**
**que** l'au moins une enveloppe (7, 8) ne présente pas de flexibilité importante.

12. Dispositif d'alimentation électrique selon l'une des revendications précédentes,
**caractérisé en ce**
**que** l'au moins une enveloppe (7, 8) entoure des sections mécaniquement sollicitées de l'au moins une amenée de courant (2, 3 ; 14), alors que des parties non mécaniquement sollicitées de l'au moins une amenée de courant (2, 3 ; 15) sont munies d'un revêtement isolant.

13. Dispositif d'alimentation électrique selon l'une des revendications précédentes,
**caractérisé en ce**
**que** l'au moins une amenée de courant (2, 3) est réalisée en forme de L.

14. Dispositif d'alimentation électrique selon l'une des revendications précédentes,
**caractérisé en ce**
**que** dans l'au moins une enveloppe (7, 8), dans une section au niveau de laquelle les moyens de contact (12) sont reliés à l'au moins une amenée de courant, est agencé un joint (20) pour rendre étanche aux liquides un espace entre l'au moins une enveloppe (7, 8) et le produit à traiter (1) avec lequel sont en contact les moyens de contact (12).

15. Dispositif d'alimentation électrique selon l'une des revendications précédentes,
**caractérisé en ce**
**que** l'au moins une amenée de courant (2, 3) comprend une première amenée de courant (2) avec des premiers moyens de contact (12) et une seconde amenée de courant (3) avec des seconds moyens de contact (12),
la première (2) et la seconde (3) amenée de courant étant déplaçables l'une par rapport à l'autre de sorte que le produit à traiter (1) peut être immobilisé entre les premiers et les seconds moyens de contact (12).

16. Dispositif d'alimentation électrique selon la revendication 15,
**caractérisé en ce**
**que** la première amenée de courant (2) et la seconde amenée de courant (3) sont déplaçables l'une par rapport à l'autre par un mécanisme à ressort (4, 5, 6, 11).

17. Dispositif d'alimentation électrique selon l'une des revendications précédentes,
**caractérisé en ce**
**que** l'au moins une amenée de courant (2, 3 ; 14) est fabriquée en titane, en acier inoxydable ou en cuivre.

18. Dispositif d'alimentation électrique selon l'une des revendications précédentes,
**caractérisé en ce**
**que** l'au moins une amenée de courant (2, 3) ne présente pas de flexibilité importante.

19. Appareil de traitement électrochimique d'un produit à traiter,
**caractérisé en ce**
**que** l'appareil comprend un dispositif d'alimentation électrique pour le produit à traiter (1) selon l'une des revendications 1 à 18.

20. Appareil selon la revendication 19,
**caractérisé en ce**
**que** l'appareil est configuré pour la galvanisation du produit à traiter (1).

21. Appareil selon la revendication 19 ou 20,
**caractérisé en ce**
**que** l'appareil est configuré pour le traitement continu du produit à traiter.
